# EUROPÄISCHE PATENTSCHRIFT

(11) **EP 3 088 651 B1**
(45) Veröffentlichungstag und Bekanntmachung des Hinweises auf die Patenterteilung: **13.11.2019**
(21) Anmeldenummer: 16163272.4
(22) Anmeldetag: 05.12.2003
(51) Int. Cl.: E06B 1/62, C09J 7/26, E04F 13/06, E04G 21/30

(54) **ABDICHTUNGSANORDNUNG FÜR FUGEN ZWISCHEN EINEM BAUTEIL UND EINER WAND UND PROFILLEISTE FÜR EINE SOLCHE ABDICHTUNGSANORDNUNG**
SEALING ASSEMBLY FOR JOINING BETWEEN A COMPONENT AND A WALL AND PROFILE STRIP FOT SUCH A SEALING ASSEMBLY
SYSTEME D'ETANCHEITE POUR JOINTS ENTRE UN COMPOSANT ET UNE PAROI ET BAGUETTE POUR UN TEL SYSTEME D'ETANCHEITE

(30) Priorität: 05.12.2002 DE 20218882 U; 05.12.2002 DE 10257116; 27.03.2003 DE 10314002
(43) Veröffentlichungstag der Anmeldung: 02.11.2016
(62) Teilanmeldung aus: 03027997.0
(73) Patentinhaber: Lehrhuber, Konrad, Dipl.-Ing., 4981 Reichersberg (AT)
(72) Erfinder: Lehrhuber, Konrad, Dipl.-Ing., 4981 Reichersberg (AT)
(74) Vertreter: Fischer & Konnerth

(56) Entgegenhaltungen:
- DE-A- 10 013 676
- DE-U- 20 211 481

## Beschreibung

Die Erfindung betrifft eine Abdichtungsanordnung für Fugen zwischen einem Bauteil, insbesondere einem Tür- oder Fensterrahmenteil, und einer jeweiligen Deckschicht einer am Bauteil angrenzenden Wand, mit einer ersten abdichtenden Profilleisteneinheit für eine bezüglich des Bauteils äußere Fuge und einer zweiten abdichtenden Profilleisteneinheit für eine bezüglich des Bauteils innere Fuge. Die Erfindung betrifft des Weiteren eine Profilleiste mit den Merkmalen des Oberbegriffs des Anspruchs 8.

Aus der DE 100 13 676 A1 ist eine gattungsgemäße Abdichtungsanordnung bekannt geworden.

Aus der DE 199 50 130 A1 ist eine an einem Fensterrahmen oder Türrahmen anbringbare Profilleiste oder Anputzleiste bekannt geworden, die einen an einem Bestandteil der Profilleiste befestigten Flachmaterialabschnitt aufweist. Der Flachmaterialabschnitt enthält einen wasser- oder wasserdampfundurchlässigen Bereich, der im Einbauzustand der Profilleiste die Fuge zwischen dem Fensterrahmen und einer Gebäudewand überbrückt. Der wasser- oder wasserdampfundurchlässige Bereich soll somit eine perfekte Abdichtung der Fuge gegen Herausdiffundieren von Wasserdampf vom warmen Gebäudeinneren zum kalten Gebäudeäußeren in eine gebäudeaußenseitig vor der Fuge angeordnete Wärmedämmschicht bereitstellen und damit die bei der Wasserdampfdiffusion auftretenden Probleme, die zusammen mit den der Wasserdampfdiffusion zugrundeliegenden Gegebenheiten an dem Übergang vom Fensterrahmen zur Gebäudewand in dieser Druckschrift ausführlich beschrieben sind, lösen. Ein Klebeband, mittels dem die Profilleiste auf dem Fensterrahmen befestigt ist, bleibt bei dieser Betrachtung unberücksichtigt.

Aus der DE 100 54 478 A1 ist eine diffusionsoffene bis diffusionssperrende mehrlagige Folienbahn zur Anschlußabdichtung von Fenstern gegenüber tragenden Baukörpern bekannt. Eine Einputzhilfe oder eine technische Bewältigung für die Fugen zwischen dem Bauteil und einer Deckschicht stellt diese im Einbauzustand abgedeckte Folienbahn nicht dar. Darüber hinaus sind die Gesamtkosten dieser Folienbahn sehr hoch. Die für den Einbau dieser Folienbahn grundsätzlich zu berücksichtigenden physikalischen Grundlagen der Wasserdampfdiffusion sind ausführlich beschrieben.

Aus der DE 200 08 712 U1 ist eine Profilleiste zum Abdichten einer Bewegungsfuge bekannt geworden, die mittels eines Schaumkunststoff-Klebebandes an einem Bauteil bzw. einem Fensterrahmen befestigt ist.

Aus der DE 202 11 481 U ist eine mehrteilige Abschlussleiste bekannt geworden, die eine eine Zwischenschicht bildende Dichtung in Form eines komprimierten Schaumstoffs aufweist, der in einem bevorzugt durchsichtigen Schlauch eingeschlossen ist, über eine Kleberschicht an einer Unterseite einer Blende der Abschlussleiste verklebt wird und nach dem Öffnen des Schlauches expandiert und nach dem Einbau der Abschlussleiste einen Spalt zwischen der Blende der Abschlussleiste und dem Mauerwerk abdichtet. Bei Verwendung unterschiedlicher Schaumstoffe mit unterschiedlichen Eigenschaften können diese unterschiedliche Farben aufweisen, so dass der jeweilige Schaumstoff durch den Schlauch hindurch erkennbar ist. Die DE 202 11 481 U zeigt den Oberbegriff des Anspruchs 8.

Aufgabe der Erfindung ist es, eine Abdichtungsanordnung der eingangs genannten Art zu schaffen, die bei einfachem und preiswertem Aufbau eine optimierte Abdichtung, insbesondere bezüglich des Eindringens von Wasserdampf in die Fuge und der anschließenden Dampfdiffusion in der Fuge, bietet und sich auch für unterschiedliche Anwendungsfälle eignet, sowie eine Profilleiste für eine solche Abdichtungsanordnung zu schaffen.

Die Aufgabe wird erfindungsgemäß durch eine Abdichtungsanordnung mit den Merkmalen des Anspruchs 1 gelöst. Durch die unterschiedlichen Dampfdiffusionswiderstände kann je nach Anwendungsfall eine gerichtete Wasserdampfdiffusion ermöglicht und gefördert werden. Die Profilleisteneinheit, die ein Teil der Abdichtungsanordnung für Fugen zwischen dem Bauteil, insbesondere einem Tür-oder Fensterrahmenteil, und einer jeweiligen Deckschicht ist, die z. B. eine Putzschicht, eine Wärmedämmschicht oder auch eine Trockenbauplatte, eine Fliese, ein Blech oder eine sonstige Bekleidung der Wandoberfläche, eine am Bauteil angrenzende Wand oder eine Laibung eines das Bauteil umgebenden Mauer- oder Bauwerks ist, bietet diese spezielle Funktion und Eigenschaften neben ihrer Funktion als Einputzhilfe, Bewegungsfugenprofil oder Randabschlußleiste. Somit kann durch das Anbringen dieses einen Teils bzw. dieser einen Baueinheit in kostengünstiger Weise der beschriebene Zusatznutzen hinsichtlich der Wasserdampfdiffusion erzielt werden.

Unter äußerer bzw. innerer Fuge wird jeweils eine sich an eine zentrale Fuge nach außen bzw. nach innen, insbesondere winkelig, anschließende Fuge oder ein jeweiliger Abschnitt der zentralen Fuge verstanden.

Die Profilleiste wird bevorzugt bei massivem und zu verputzendem Mauerwerk angewendet. Hier kommen neben Beton insbesondere gut diffusionsfähige Materialien wie Ziegel, Porenbeton oder dergleichen in Betracht. Die Profilleiste ist ebenso für Konstruktionen aus Holz oder Metall geeignet. Die Bekleidung wird mit Putz oder auch mit plattenförmigen Materialien, insbesondere im Trockenbau, vorgenommen. Um die Profilleiste für die unterschiedlichen Deckschichten verwenden zu können, muß die Anschlußeinrichtung der jeweiligen Profilleiste für die jeweilige Deckschicht jeweils entsprechend gestaltet sein.

Vorteilhafte Ausgestaltungen der Erfindung sind in den abhängigen Ansprüchen angegeben.

Erfindungsgemäß ist der Dampfdiffusionswiderstand der ersten Profilleisteneinheit für die äußere Fuge kleiner als der Dampfdiffusionswiderstand der zweiten Profilleisteneinheit für die innere Fuge. Hierdurch wird eine zweckmäßige Richtung der Wasserdampfdiffusion vom Innenraum zum Außenraum vorgegeben oder unterstützt.

Erfindungsgemäß weist zumindest eine der beiden Profilleisteneinheiten eine ein- oder mehrteilige Profilleiste und eine abdichtende Zwischenschicht auf. Die Profilleiste kann in bekannter Art als Einputzleiste dienen. Die Zwischenschicht bildet im Einbauzustand der Profilleisteneinheit eine Abdichtung zwischen der Profilleiste und dem Bauteil. Erfindungsgemäß ist die Zwischenschicht eine elastische Befestigungseinrichtung zum Anbringen der Profilleiste an dem Bauteil. Die Zwischenschicht übernimmt dann die Funktion des elastischen Ausgleichs in der Fuge oder Bewegungsfuge zwischen dem Bauteil und der Profilleiste bzw. der Deck- oder Putzschicht.

Erfindungsgemäß ist die Zwischenschicht ein Schaumkunststoffklebeband oder eine Klebemasse, die dann den Dampfdiffusionswiderstand der Profilleisteneinheit bestimmt, wenn die Profilleiste aus einem diffusionsdichten Material wie z. B. Kunststoff, insbesondere PVC, oder Metall hergestellt ist.

Zum Festlegen des Dampfdiffusionswiderstands gibt es unterschiedliche Möglichkeiten. So kann der größere Dampfdiffusionswiderstand der inneren Profilleisteneinheit durch eine größere Breite der Zwischenschicht in Diffusionsrichtung und der geringere Dampfdiffusionswiderstand der äußeren Profilleisteneinheit durch eine schmalere Breite der Zwischenschicht gebildet sein. Zweckmäßigerweise weist die Zwischenschicht eine Breite von 5 mm bis 20 mm in Diffusionsrichtung auf. Damit lassen sich die gewünschten Dampfdiffusionswiderstände einstellen, während auch die sichere Befestigung der Profilleiste gewährleistet ist.

Andererseits können die unterschiedlichen Dampfdiffusionswiderstände der beiden Profilleisteneinheiten auch durch unterschiedliche Materialeigenschaften der Zwischenschichten eingestellt werden. Das geschieht insbesondere durch die Wahl der Rohdichte oder durch die Wahl des Materials wie z. B. Acrylschaum, Polyolefinschaum, Butyl oder dergleichen. Natürlich stellt auch eine Kombination der Variation der Breite und des Materials unterschiedliche Dampfdiffusionswiderstände her.

Vorzugsweise ist die Wasserdampfdiffusions-Widerstandszahl bzw. der µ-Wert der Zwischenschicht der einen Profilleisteneinheit größer als 5500 und insbesondere größer als 7000, wobei insbesondere die innere Profilleisteneinheit diesen Wert aufweist. Dann beträgt der Dampfdiffusionswiderstand oder S_{d}-Wert (S_{d}-Wert [m] = µ-Wert multipliziert mit dem Diffusionsweg [m]) der einen Profilleisteneinheit, insbesondere der inneren Profilleisteneinheit, mindestens 100 m äquivalente Luftschichtdicke bei in der Praxis üblichen Schaumklebebandbreiten.

Die nachfolgenden Beispiele zeigen die für 100 m äquivalente Luftschichtdicke erforderlichen Breiten der Zwischenschicht bzw. des Schaumklebebandes:

| | |
|---|---|
| bei µ-Wert 5550: | 18,2 mm Breite der Zwischenschicht (5500 mal 0,0182 m = 101,01 m), |
| bei µ-Wert 7000: | 14,3 mm Breite der Zwischenschicht, |
| bei µ-Wert 11100: | 9 mm Breite der Zwischenschicht, und |
| bei µ-Wert 16700: | 6 mm Breite der Zwischenschicht. |

Ein Bauteil mit einem S_{d}-Wert von 100 m äquivalenter Luftschichtdicke oder mehr wird in der Praxis als diffusionsdicht bezeichnet, während ein Bauteil mit einem S_{d}-Wert von 0,5 m äquivalenter Luftschichtdicke oder weniger in der Praxis als diffusionsoffen bezeichnet wird.

Bei einer bevorzugten Abdichtungsanordnung beträgt der größere Dampfdiffusionswiderstand zumindest das Zweifache des geringeren Dampfdiffusionswiderstands und insbesondere das Zehnfache bis zum Hundertfachen oder darüber. Damit wird ein Dampfdruckgefälle von Innen nach Außen erzielt und die Dampfdiffusion von Innen nach Außen bestimmt. Zum Herstellen dieses Verhältnisses kann der µ-Wert der äußeren Profilleisteneinheit auch unter 5500 liegen. Grundsätzlich kann eine der beiden Profilleisteneinheiten mit ihrer Dampfdiffusionseigenschaft vorgegeben sein und die andere Profilleisteneinheit wird daran angepaßt, um das gewünschte Dampfdruckgefälle einzustellen, oder beide Profilleisteneinheiten werden hinsichtlich ihrer Dampfdiffusionseigenschaften ausgewählt.

Erfindungsgemäß weisen die Profilleisteneinheiten, insbesondere deren Zwischenschichten, optisch unterschiedliche Kennungen, insbesondere unterschiedliche Farben, auf, die einem jeweiligen Dampfdiffusionswiderstand zugeordnet sind, so dass die Handhabung erleichtert wird. So werden Verwechslungen der unterschiedlichen Profilleisteneinheiten, insbesondere bei Handhabung durch Hilfskräfte, vermieden und die Abdichtung technisch richtig erstellt.

Des Weiteren ist zweckmäßigerweise vorgesehen, dass die Zwischenschicht winddicht oder luftdicht ist, so dass Verlust an Wärmeenergie des Raumes und Schäden durch Kondenswasser vermieden werden können. Damit können auch bestehende Normen und Regelungen erfüllt werden.

Um zu verhindern, dass Wasserdampf durch die Deckschicht an der Profilleisteneinheit vorbei in die Fuge gelangt, kann vorgesehen sein, dass die Profilleiste einen Flachstreifen aufweist, der die Fuge zwischen Bauteil und der angrenzenden Wand übergreift. Damit wird eine zusätzliche Abdichtung geschaffen, die die Wirksamkeit der Profilleisteneinheit in ihrer Abdichtstellung, insbesondere bei diffusionsfähigen Deckschichten, verbessert oder es wird zumindest ein größerer Diffusionsweg, insbesondere bei diffusionsfähigem Wandmaterial, erforderlich, der den S_{d}-Wert erhöht.

Zweckmäßigerweise wird der Flachstreifen mit einem bestimmten Dampfdiffusionswiderstand gebildet und insbesondere weist der Flachstreifen einen höheren Dampfdiffusionswiderstand auf als die Zwischenschicht. Dann bestimmt die Zwischenschicht den Dampfdiffusionswiderstand der Profilleiste bzw. der Profilleisteneinheit. Selbstverständlich kann der Flachstreifen winddicht oder luftdicht gebildet sein.

Der Flachstreifen ist insbesondere durch Kleben, Schweißen oder Klemmen mit der Profilleiste verbunden oder er ist einstückig mit der Profilleiste hergestellt, beispielsweise durch Koextrusion.

Vorzugsweise ist der Flachstreifen elastisch verformbar ausgebildet, so dass er beim Montieren an der Wand, insbesondere unter Vorspannung, elastisch verformt anliegt. Zusätzlich kann der Flachstreifen an der Wand z. B. durch Kleben befestigt werden.

Wenn sich der Flachstreifen über eine festlegbare Strecke entlang der am Bauteil angrenzenden Wand erstreckt, wird der Weg für die Dampfdiffusion und damit der Dampfdiffusionswiderstand entsprechend dieser Strecke festgelegt.

Die Aufgabe wird weiterhin durch eine Profilleiste mit den Merkmalen des Anspruchs 8 gelöst, wobei die Zwischenschicht mit einem bestimmten Dampfdiffusionswiderstand gebildet ist. Die Vorteile ergeben sich aus den obigen Erläuterungen zu der Abdichtungsanordnung. Die erfindungsgemäße Profilleiste ist insbesondere zur Verwendung in der erfindungsgemäßen Abdichtungsanordnung vorgesehen.

Vorzugsweise ist die Trägerfläche bei einer einteiligen Profilleiste eine Befestigungsbasis der Profilleiste und bei einer mehrteiligen Profilleiste die Befestigungsbasis oder ein weiteres Teil der Profilleiste.

Erfindungsgemäß bildet die Zwischenschicht im Einbauzustand eine Abdichtung zwischen der Profilleiste und dem Bauteil. Die Zwischenschicht ist ein Schaumkunststoffband oder eine Klebemasse und sie ist eine elastische Befestigungseinrichtung für die Profilleiste an einem Bauteil.

Erfindungsgemäß bestimmt die Zwischenschicht den Dampfdiffusionswiderstand der Profilleiste, der insbesondere durch eine unterschiedliche Breite der Zwischenschicht in Diffusionsrichtung und/oder durch unterschiedliche Materialeigenschaften der Zwischenschicht gebildet ist. Zweckmäßigerweise hat die Zwischenschicht einen µ-Wert von größer als 5500 und insbesondere größer als 7000 und der Dampfdiffusionswiderstand der Zwischenschicht kann einen Wert von mindestens 100 m äquivalenter Luftschichtdicke aufweisen.

Grundsätzlich gelten die obigen Ausführungen zu bevorzugten Ausführungsformen der Abdichtungsanordnung in entsprechender Weise auch für bevorzugte Ausführungsformen der Profilleiste.

Vorzugsweise enthält die Profilleiste einen Schutzsteg, der sichtseitig vor der Befestigungseinrichtung angeordnet sein kann und insbesondere mit zumindest einem Teil der Profilleiste einteilig geformt sein kann. Ein derartiger Schutzsteg kann eine elastische Dichtlippe oder ein eine Schattenfuge bildender Steg sein.

Weiterhin ist bevorzugt, dass die Profilleiste nach der Verarbeitung teilweise sichtbar ist oder am sichtbaren Übergang zwischen Bauteil und Deckschicht angeordnet ist.

Vorzugsweise ist die Profilleiste aus Kunststoff hergestellt. Unter den Kunststoffen sind Polyvinylchlorid, Polyethylen, Polypropylen, Polystyrol und Polyurethan besonders bevorzugt. Der Querschnitt des Kunststoffanteils der Profilleiste bleibt über die Profilleistenlänge gleich, so dass die Profilleiste im Extrusionsverfahren kostengünstig hergestellt werden kann.

Nachfolgend werden ein Ausführungsbeispiel einer Abdichtungsanordnung sowie unterschiedliche Profilleisteneinheiten unter Bezugnahme auf die Zeichnung näher erläutert. Es zeigt:
- Fig. 1: in einer Querschnittansicht eine Abdichtungsanordnung mit zwei Profilleisten zum Abdichten jeweils einer an ein Rahmenteil angrenzenden Fuge;
- Fig. 2: in einer Querschnittansicht eine Profilleiste mit einer Abdecklippe;
- Fig. 3: in einer Querschnittansicht eine weitere Profilleiste mit einem Abdecksteg; und
- Fig. 4: in einer Querschnittansicht ein weiteres Ausführungsbeispiel einer Profilleiste für die Abdichtungsanordnung; und
- Fig. 5: in einer Querschnittansicht eine weitere Profilleiste mit einem Flachstreifen.

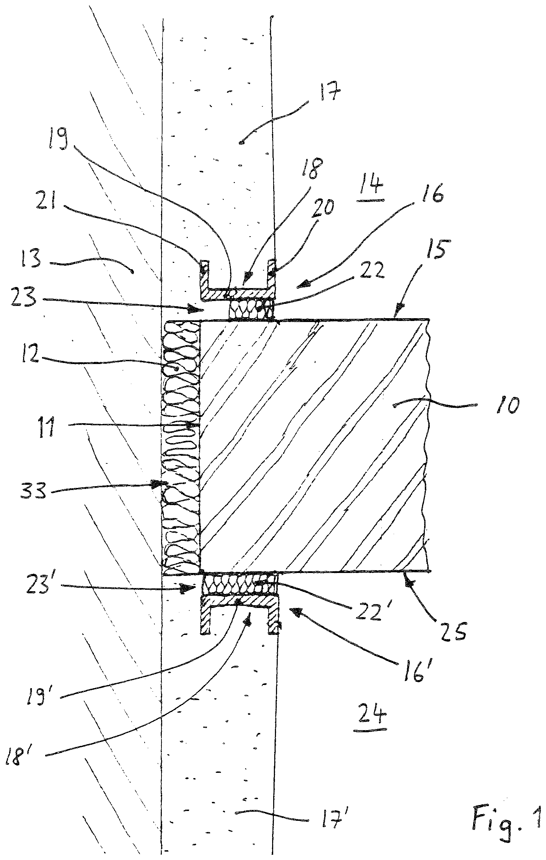

Ein Bauteil 10, beispielsweise ein Tür- oder Fensterrahmen (in Fig. 1 schematisch dargestellt), das in einer Wandöffnung eingesetzt ist, ist an seiner Umfangsseite 11 mittels eines in eine angrenzende zentrale Fuge 33 eingebrachten Fugenfüllmaterials 12 mit der Wand 13 zumindest abschnittsweise in Bauteillängsrichtung verbunden. Die bekannten Fugenfüllmaterialien gelten allgemein nicht als diffusionsdicht bezüglich Wasserdampfdiffusion oder wasserdicht oder luftdicht. An der zum Außenraum 14 hin gerichteten Außenseite 15 des Bauteils 10 ist eine erste oder äußere Profilleisteneinheit 16 als Anschluß zu einer auf der Wand 13 aufgebrachten äußeren Deckschicht, beispielsweise einer Putzschicht 17, angeordnet.

Die Profilleisteneinheit 16 enthält eine im Querschnitt in etwa U-förmige Profilleiste 18, die eine Befestigungsbasis 19 sowie einen vorderen Einputzschenkel 20 und einen hinteren Einputzschenkel 21 aufweist. Die Profilleiste 18 ist mittels eines aus Kunststoff hergestellten Schaumklebebands 22 an der Außenseite 15 des Bauteils 10 befestigt, so dass das Schaumklebeband 22 eine Zwischenschicht zwischen dem Bauteil 10 und der Befestigungsbasis 19 der Profilleiste 18 bildet.

Beim Aufbringen der Putzschicht 17 auf die Wand 13 dient der vordere Einputzschenkel 20 als Einputzhilfe für ein Putzwerkzeug und er gibt die Dicke der Putzschicht 17 vor. Eine zwischen der Profilleiste 18 und dem Bauteil 10 gebildete Fuge 23 ist durch das Schaumklebeband 22 zur Sichtseite hin verschlossen bzw. abgedichtet und einwärts in Richtung zur Wand 13 hin zumindest teilweise von dem Schaumklebeband 22 ausgefüllt (siehe Darstellung in Fig. 1). Die Fuge 23 gestattet somit aufgrund der elastischen Eigenschaften des Schaumklebebands 22 oder einer entsprechenden Zwischenschicht Ausgleichsbewegungen zwischen dem Bauteil 10 und der Profileiste 18 bzw. der Putzschicht 17.

An der einem Innenraum 24 zugewandten Innenseite 25 des Bauteils 10 ist eine zweite oder innere Profilleisteneinheit 16' vorgesehen, die zur ersten Profilleisteneinheit 16 gleichartig oder ähnlich ist und bezüglich des Bauteils 10 gegenüberliegend zur ersten Profilleisteneinheit 16 in entsprechender Weise am Bauteil 10 angebracht ist. Das Schaumklebeband 22' verbindet wiederum die Befestigungsbasis 19' der Profilleiste 18' mit dem Bauteil 10, ist bei dieser zweiten Profilleisteneinheit 16' jedoch breiter gebildet, hier so breit, dass es mit der gesamten Breite der Befestigungsbasis 19' in Kontakt ist.

Die beiden Profilleisteneinheiten 16 und 16' bilden eine Abdichtungsanordnung für die Fugen 23 bzw. 23' zwischen dem Bauteil 10 und der jeweiligen Putzschicht 17 bzw. 17'. Die Abdichtungsanordnungen in den Fugen 23, 23' bzw. die beiden Profilleisteneinheiten 16 und 16' bilden eine mengenmäßige Richtungssteuerung für in die Fuge 33 zwischen Bauteil 10 und Wand 13 eingedrungenen Wasserdampf zwischen dem Innenraum 24 und dem Außenraum 14. Um dem im Innenraum 24 vorhandenen Wasserdampf möglichst wenig Möglichkeit zu bieten, über die durch Kondenswasser gefährdete Fuge 33 in den Außenraum 14 bzw. speziell hier vom Gebäudeinneren nach außen zu gelangen, ist der Dampfdiffusionswiderstand der inneren Profilleisteneinheit 16' größer eingestellt als der Dampfdiffusionswiderstand der äußeren Profilleisteneinheit 16. Die aus Kunststoff und insbesondere aus PVC hergestellte Profilleiste 18 bzw. 18' ist dampfdicht. Somit bestimmt das elastische Material des Schaumklebebandes 22 bzw. 22' den Dampfdiffusionswiderstand der Profilleisteneinheit 16 bzw. 16'.

Das Schaumklebeband 22 bzw. 22' wird daher aus einem Material gebildet, das eine Wasserdampfdiffusions-Widerstandszahl µ von größer als 5500 und insbesondere größer als 7000 aufweist. Wenn das innere Schaumklebeband 22' eine Breite von beispielsweise 15 mm besitzt (Breite in Richtung des Dampfdiffusionsweges aus der Fuge 23 nach außen), weist es bei µ = 7000 einen S_{d}-Wert von 105 m auf und bildet damit eine diffusionshemmende Schicht. Das äußere Schaumklebeband 22 ist bei gleichem Material beispielsweise mit einer Breite von 10 mm gebildet und besitzt folglich einen S_{d}-Wert von 70. Damit ist der Dampfdiffusionswiderstand des äußeren Schaumklebebands 22 geringer als der Dampfdiffusionswiderstand des inneren Schaumklebebands 22'. Für den Fall, dass trotz einer Abdichtung etwas Wasserdampf in die Fuge 33 eindringt, kann dieser von innen nach außen diffundieren und wird nicht zwischen der inneren Profilleisteneinheit 16' und der äußeren Profilleisteneinheit 16 zurückgehalten, wodurch, insbesondere wenn ein Temperaturgefälle vom Innenraum 24 zum Außenraum 14 besteht, Feuchteschäden entstehen könnten.

Der Dampfdiffusionswiderstand bzw. der S_{d}-Wert der beiden Profilleisteneinheiten 16 bzw. 16' kann somit jeweils durch Wahl des Materials bzw. der Materialeigenschaften des Schaumklebebands 22 bzw. 22' im Hinblick auf den jeweiligen Dampfdiffusionswiderstand sowie durch die Breite oder Dicke des Schaumklebebands 22 bzw. 22' oder allgemein der Zwischenschicht zwischen der Profilleiste 18 bzw. 18' und dem Bauteil 10 festgelegt werden.

Das Schaumklebeband 22, 22' kann auch aus zwei nebeneinander angeordneten und voneinander beabstandeten schmaleren Streifen gebildet sein, so dass zwar eine breite Klebebasis für die Profileiste 18, 18' bereitgestellt ist, der Dampfdiffusionswiderstand aber dennoch variiert werden kann.

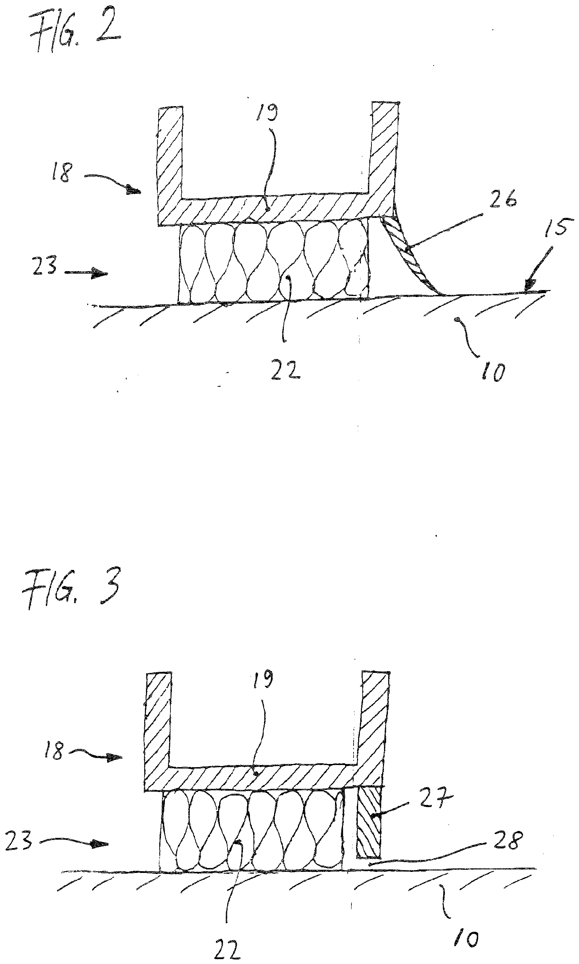

Fig. 2 zeigt eine Ausführungsform der Profilleiste 18 mit einem das Schaumklebeband 22 abdeckenden Schutzteil in Form einer elastischen Dichtlippe 26, die aus einem elastischen Material besteht und an die Profilleiste 18 anextrudiert ist. Die Dichtlippe 26 schützt das Schaumklebeband 22 vor Nässe und UV-Strahlung, gestattet jedoch die Wasserdampfdiffusion.

Fig. 3 zeigt eine weitere Ausführungsform der Profilleiste 18 mit einem das Schaumklebeband 22 abdeckenden Schutzteil in Form eines festen Schutzsteges 27, der sichtseitig vor der Befestigungseinrichtung bzw. dem Schaumklebeband 22 angeordnet ist und dieses bzw. die Fuge 23 weitgehend abdeckt und ebenfalls an die Profilleiste 18 anextrudiert ist. Der Schutzsteg 27 kann sowohl aus einem elastischen wie auch aus einem plastischen Material hergestellt sein. Der zwischen dem Schutzsteg 27 und dem Bauteil 10 verbleibende Schlitz 28 gestattet weiterhin eine unbehinderte Wasserdampfdiffusion.

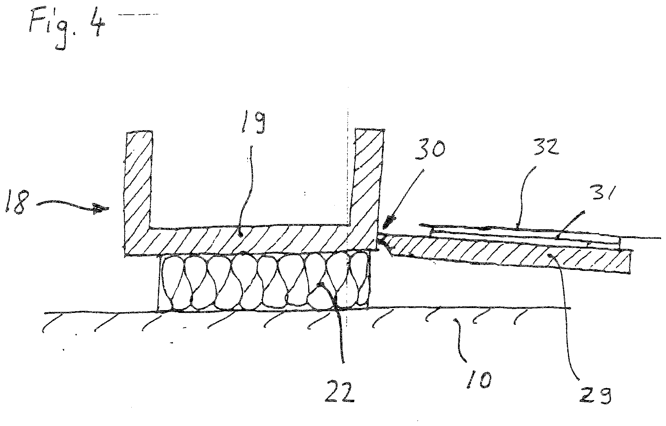

Die in Fig. 4 dargestellte Ausführungsform der Profileiste 18 enthält eine streifenförmige Schutzlasche 29, die im Extrusionsverfahren aus demselben harten Kunststoff hergestellt ist wie die Befestigungsbasis 19 mit den beiden Einputzschenkeln 20 und 21, und die mittels einer Schwächungszone 30 geringer Dicke mit der Profilleiste 18 verbunden an dieser Schwächungszone 30 von der Profilleiste 18 abtrennbar ist. Auf der Vorderseite der Schutzlasche 29 ist mittels eines Klebestreifens 31 eine Schutzfolie 32 aufgeklebt. Die Funktion einer solchen Schutzlasche 29 ist in der DE 200 08 712 U1 beschrieben.

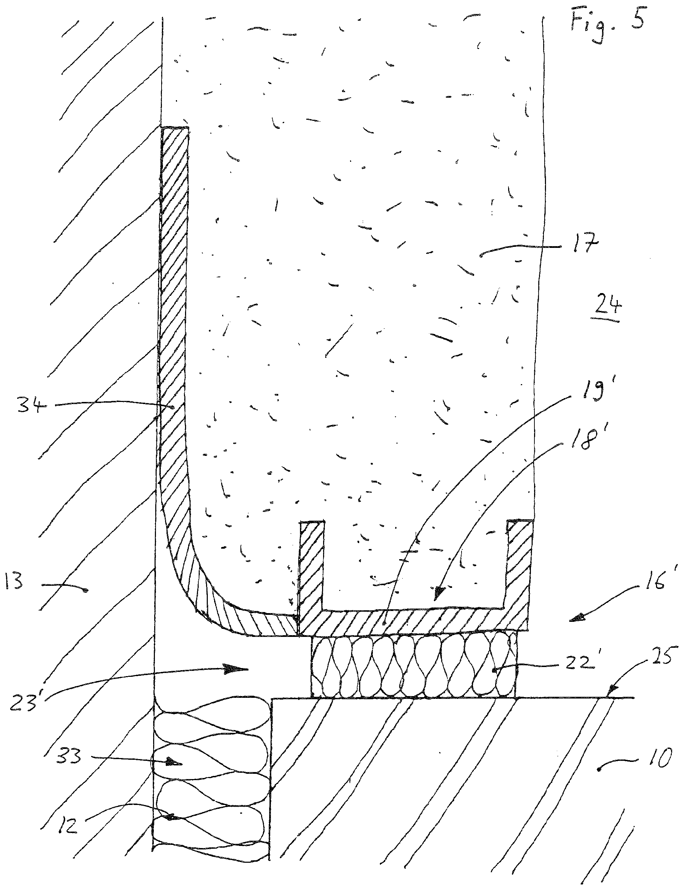

Fig. 5 zeigt ein Ausführungsbeispiel einer inneren Profilleisteneinheit, deren Profilleiste 18' am Innenende der Befestigungsbasis 19' einen Flachstreifen 34 enthält, der daran einstückig angeformt oder anderweitig dicht angebracht ist. Der vorzugsweise elastische Flachstreifen 34 wird bei der Montage der Profilleisteneinheit 16' an die Wand 13 angelegt und von der Deckschicht bzw. Putzschicht 17' abgedeckt. Damit bildet der Flachstreifen 34 eine Abdichtung zur Wand 13 hin oder bewirkt zumindest einen größeren Umweg für aus dem Innenraum 24 kommenden Wasserdampf auf seinem Diffusionsweg in und durch die Fuge 33 und daraus in die Umgebung bzw. den Außenraum. Durch die gewählte Länge des Flachstreifens 34 (Länge in der Zeichenebene entlang der Wand 13) wird der Widerstand gegen die Diffusion eingestellt.

Der Flachstreifen 34 wird mit einem bestimmten Dampfdiffusionswiderstand hergestellt, der für die jeweilige Abdichtumgebung entsprechend eingestellt wird. Wenn der Dampfdiffusionswiderstand des Flachstreifens 34 größer ist wie derjenige der Zwischenschicht 22, dann bestimmt die Zwischenschicht 22 den Dampfdiffusionswiderstand der Profilleisteneinheit 16. Selbstverständlich ist der Flachstreifen 34 auch winddicht und luftdicht. Der Flachstreifen 34 kann beim Einbau elastisch an die Wand 13 angelegt werden und er kann zusätzlich an der Wand 13 z. B. durch Verkleben befestigt werden.

Der Flachstreifen 34 kann mit unterschiedlichem Material oder Querschnitt bzw. Dicke über seine Länge (Länge in der Zeichenebene entlang der Wand 13) gebildet sein, so dass seine Eigenschaften bezüglich der Dampfdiffusion variieren können. Auf diese Weise kann die Dampfdiffusion und auch die Winddichtigkeit eingestellt werden.

Bei einer grundsätzlich gemäß Fig. 1 gebildeten Abdichtungsanordnung kann die äußere Profilleiste 18 wie auch die innere Profilleiste 18' den Flachstreifen 34 entsprechend dem Ausführungsbeispiel der Fig.5 aufweisen. Andererseits kann die äußere Profilleiste 18 ohne den Flachstreifen 34 gebildet sein, wohingegen die innere Profilleiste 18' den Flachstreifen 34 aufweist. Schließlich ist auch denkbar, die Außenseite der Abdichtungsanordnung ohne Profilleiste zu bilden und an der Innenseite eine Profilleiste 18' mit oder ohne Flachstreifen 34 zu verwenden. Ansonsten kann die den Flachstreifen 34 enthaltende Profilleiste 18 bzw. 18' entsprechend den Figuren 2 bis 4 mit Dichtlippe, Schutzsteg oder Schutzlasche gebildet sein.

**Bezugszeichenliste**

| | | | |
|---|---|---|---|
| 10 | Bauteil | 23 | Fuge |
| 11 | Umfangsseite | 24 | Innenraum |
| 12 | Fugenfüllmaterial | 25 | Innenseite |
| 13 | Wand | 26 | Dichtlippe |
| 14 | Außenraum | 27 | Schutzsteg |
| 15 | Außenseite | 28 | Schlitz |
| 16 | äußere Profilleisteneinheit | 29 | Schutzlasche |
| 17 | Putzschicht | 30 | Schwächungszone |
| 18 | Profilleiste | 31 | Klebestreifen |
| 19 | Befestigungsbasis | 32 | Schutzfolie |
| 20 | vorderer Einputzschenkel | 33 | Fuge |
| 21 | hinterer Einputzschenkel | 34 | Flachstreifen |
| 22 | Schaumklebeband | | |

## Patentansprüche

1. Abdichtungsanordnung für Fugen zwischen einem Bauteil (10), insbesondere einem Tür- oder Fensterrahmenteil, und einer jeweiligen Deckschicht (17, 17') einer am Bauteil (10) angrenzenden Wand (13),
mit einer ersten abdichtenden Profilleisteneinheit (16) für eine bezüglich des Bauteils (10) äußere Fuge (23) und einer zweiten abdichtenden Profilleisteneinheit (16') für eine bezüglich des Bauteils (10) innere Fuge (23'),
**dadurch gekennzeichnet,**
**dass** die erste Profilleisteneinheit (16) einen Dampfdiffusionswiderstand aufweist, der sich vom Dampfdiffusionswiderstand der zweiten Profilleisteneinheit (16') unterscheidet und
**dass** der Dampfdiffusionswiderstand der ersten Profilleisteneinheit (16) für die äußere Fuge (23) kleiner ist als der Dampfdiffusionswiderstand der zweiten Profilleisteneinheit (16') für die innere Fuge (23'),
**dass** zumindest eine der Profilleisteneinheiten (16 bzw. 16') eine ein- oder mehrteilige Profilleiste (18 bzw. 18') und eine abdichtende Zwischenschicht (22, 22') aufweist,
**dass** die Deckschicht (17, 17') bei dieser zumindest einen Profilleisteneinheit (16 bzw. 16') eine Putzschicht (17, 17') ist und diese zumindest eine Profilleisteneinheit (16 bzw. 16') eine Anschlusseinrichtung für die Putzschicht (17, 17') aufweist,
**dass** die Zwischenschicht (22, 22') ein Schaumkunststoffklebeband oder eine Klebemasse ist und eine elastische Befestigungseinrichtung zum Anbringen der Profilleiste (18, 18') an dem Bauteil (10) bildet,
**dass** die zumindest eine Profilleisteneinheit (16, 16') im Einbauzustand in der Fuge (23, 23') zwischen der Putzschicht (17) und dem Bauteil (10) eingebaut und mit der Putzschicht (17) und dem Bauteil (10) abdichtend verbunden ist
und die Zwischenschicht (22, 22') im Einbauzustand der Profilleisteneinheit (16, 16') eine Abdichtung zwischen der Profilleiste (18, 18') und dem Bauteil (10) bildet,
**dass** die Zwischenschicht (22, 22') den Dampfdiffusionswiderstand der Profilleisteneinheit (16, 16') bestimmt und
**dass** die Zwischenschichten (22, 22') der Profilleisteneinheiten (16, 16') optisch unterschiedliche Kennungen oder Farben aufweisen, die einem jeweiligen Dampfdiffusionswiderstand zugeordnet sind.

2. Abdichtungsanordnung nach Anspruch 1,
**dadurch gekennzeichnet, dass** die Profilleiste (18 bzw. 18') eine Befestigungsbasis (19) aufweist, an der die Zwischenschicht (22, 22') befestigt ist.

3. Abdichtungsanordnung nach Anspruch 1 oder 2,
**dadurch gekennzeichnet, dass** der größere Dampfdiffusionswiderstand der inneren Profilleisteneinheit (16') durch eine größere Breite der Zwischenschicht (22') in Diffusionsrichtung und der geringere Dampfdiffusionswiderstand der äußeren Profilleisteneinheit (16) durch eine schmalere Breite der Zwischenschicht (22) in Diffusionsrichtung gebildet ist.

4. Abdichtungsanordnung nach einem der Ansprüche 1 bis 3,
**dadurch gekennzeichnet, dass** die unterschiedlichen Dampfdiffusionswiderstände der beiden Profilleisteneinheiten (16, 16') durch unterschiedliche Materialeigenschaften der Zwischenschichten (22, 22') gebildet sind.

5. Abdichtungsanordnung nach einem der Ansprüche 1 bis 4,
**dadurch gekennzeichnet, dass** die Zwischenschicht (22, 22') der einen Profilleisteneinheit (16 bzw, 16') einen µ-Wert von größer als 5500 und insbesondere größer als 7000 aufweist und/oder dass der Dampfdiffusionswiderstand der einen Profilleisteneinheit (16 bzw. 16') einen Wert von mindestens 100 m äquivalenter Luftschichtdicke aufweist.

6. Abdichtungsanordnung nach einem der Ansprüche 1 bis 5,
**dadurch gekennzeichnet, dass** der größere Dampfdiffusionswiderstand zumindest das Zweifache, vorzugsweise das 10-fache oder 100-fache, des geringeren Dampfdiffusionswiderstands beträgt.

7. Abdichtungsanordnung nach einem der Ansprüche 1 bis 6,
**dadurch gekennzeichnet, dass** zumindest eine der Profilleisteneinheiten (16, 16') einen Flachstreifen (34) aufweist, der die zentrale Fuge (33) zwischen dem Bauteil (10) und der angrenzenden Wand (13) übergreift und insbesondere einen bestimmten Dampfdiffusionswiderstand aufweist und/oder einen höheren Dampfdiffusionswiderstand aufweist als die Zwischenschicht (22, 22')
und/oder winddicht oder luftdicht ist
und/oder durch Kleben, Schweißen oder Klemmen mit der Profilleiste (18, 18') verbunden ist oder einstückig mit der Profilleiste (18, 18') hergestellt ist
und/oder elastisch verformbar ausgebildet ist
und/oder sich über eine Strecke entlang der am Bauteil (10) angrenzenden Wand (13) erstreckt
und/oder dass der Flachstreifen (34) der ersten Profilleisteneinheit (16) sich vom Flachstreifen (34) der zweiten Profilleisteneinheit (16'), insbesondere bezüglich Form, Material oder Dampfdiffusionswiderstand, unterscheidet.

8. Ein- oder mehrteilige Profilleiste, die zum Abdichten einer Fuge (23, 23') zwischen einem Bauteil (10), insbesondere einem Tür-oder Fensterrahmenteil, und einer Deckschicht (17) einer am Bauteil (10) angrenzenden Wand (13) ausgebildet ist und eine Zwischenschicht (22, 22') aufweist, die auf einer dem Bauteil (10) zugeordneten Trägerfläche angebracht ist,
**dadurch gekennzeichnet,**
**dass** die Zwischenschicht (22, 22')
- ein Schaumkunststoffklebeband oder eine Klebemasse ist und mit einem bestimmten Dampfdiffusionswiderstand gebildet ist,
- eine optische Kennung oder Farbe aufweist, die einem jeweiligen Dampfdiffusionswiderstand zugeordnet ist,
- im Einbauzustand eine Abdichtung zwischen der Profilleiste (18, 18') und dem Bauteil (10) bildet und
- eine elastische Befestigungseinrichtung für die Profilleiste (18, 18') an dem Bauteil (10) ist.

9. Profilleiste nach Anspruch 8,
**dadurch gekennzeichnet, dass** die Trägerfläche von einer Befestigungsbasis (19) der Profilleiste (18, 18') gebildet ist, an der die Zwischenschicht (22, 22') befestigt ist.

10. Profilleiste nach Anspruch 8 oder 9,
**dadurch gekennzeichnet, dass** die Zwischenschicht (22, 22') den Dampfdiffusionswiderstand der Profilleiste (18, 18') bestimmt und dass insbesondere der Wert des Dampfdiffusionswiderstands durch Variation der Breite der Zwischenschicht (22, 22') in Diffusionsrichtung und/oder durch Variation der Materialeigenschaften der Zwischenschicht (22, 22') festlegbar ist, wobei insbesondere die Zwischenschicht (22, 22') einen µ-Wert von größer als 5500 und insbesondere größer als 7000 aufweist, und wobei insbesondere der Dampfdiffusionswiderstand einen Wert von mindestens 100 m äquivalenter Luftschichtdicke aufweist.

11. Profilleiste nach einem der Ansprüche 8 bis 10,
**dadurch gekennzeichnet, dass** die Profilleiste (18, 18') einen Flachstreifen (34) aufweist, der die Fuge (33) zwischen dem Bauteil (10) und der angrenzenden Wand (13) übergreift und der insbesondere einen bestimmten Dampfdiffusionswiderstand und bevorzugt einen höheren Dampfdiffusionswiderstand als die Zwischenschicht (22, 22') aufweist.

12. Profilleiste nach einem der Ansprüche 8 bis 11,
**dadurch gekennzeichnet, dass** sie nach der Verarbeitung teilweise sichtbar ist oder am sichtbaren Übergang zwischen Bauteil (10) und Deckschicht (17) angeordnet ist.

## Claims

1. A sealing arrangement for joints between a structural member (10), particularly a door or window frame element, and a corresponding finish layer (17, 17') of a wall (13) bordering said structural member (10), comprising a first sealing profile molding unit (16) for an outer joint (23) relative to said structural member (10) and a second sealing profile molding unit (16') for an inner joint (23') relative to said structural member (10),
**characterized in that**
said first profile molding unit (16) comprises a vapor diffusion resistance which differs from the vapor diffusion resistance of the second profile molding unit (16') and
**in that** the vapor diffusion resistance of the first profile molding unit (16) for the outer joint (23) is smaller than the vapor diffusion resistance of the second profile molding unit (16') for the inner joint (23'),
**in that** at least one of the profile molding units (16 or 16') comprises a single or multiple part profile molding (18 or 18') and a sealing interlayer (22, 22'),
**in that** the finish layer (17, 17') for this at least one profile molding unit (16 or 16') is a plaster layer (17, 17') and this at least one profile molding unit (16 or 16') comprises a connection device for the plaster layer (17, 17'),
**in that** the interlayer (22, 22') is a foam plastic adhesive tape or an adhesive cement and forms an elastic fastener for fitting the profile molding (18, 18') to the structural member (10),
**in that** the at least one profile molding unit (16, 16') in its fitted condition is installed in the joint (23, 23') between the plaster layer (17) and the structural member (10) and is sealingly connected to said plaster layer (17) and said structural member (10) and the interlayer (22, 22') in the fitted condition of the profile molding unit (16, 16') forms a seal between the profile molding (18, 18') and the structural member (10),
**in that** the interlayer (22, 22') determines the vapor diffusion resistance of the profile molding unit (16, 16') and
**in that** the interlayers (22, 22') of the profile molding units (16, 16') comprise optically differing identifiers or colors which are assigned to a vapor diffusion resistance in each case.

2. The sealing arrangement as set forth in claim 1,
**characterized in that** the profile molding (18 or 18') comprises a fastening base (19) to which the interlayer (22, 22') is attached.

3. The sealing arrangement as set forth in claim 1 or 2,
**characterized in that** the greater vapor diffusion resistance of the inner profile molding unit (16') is formed by a greater width of the interlayer (22') in the diffusion direction and the smaller vapor diffusion resistance of the outer profile molding unit (16) is formed by a thinner width of the interlayer (22) in the diffusion direction.

4. The sealing arrangement as set forth in any of the claims 1 to 3,
**characterized in that** the differing vapor diffusion resistances of the two profile molding units (16, 16') are formed by differing material properties of the interlayers (22, 22').

5. The sealing arrangement as set forth in any of the claims 1 to 4, **characterized in that** the interlayer (22, 22') of the one profile molding unit (16 or 16') comprises a µ value greater than 5500 and particularly greater than 7000 and/or
**in that** the vapor diffusion resistance of the one profile molding unit (16 or 16') comprises a value of at least 100 m equivalent air film thickness.

6. The sealing arrangement as set forth in any of the claims 1 to 5, **characterized in that** the greater vapor diffusion resistance amounts to at least twice, preferably 10 times or 100 times the smaller vapor diffusion resistance.

7. The sealing arrangement as set forth in any of the claims 1 to 6, **characterized in that** at least one of the profile molding units (16, 16') comprises a flat strip (34) which covers the central joint (33) between the structural member (10) and the bordering wall (13) and comprises in particular a defined vapor diffusion resistance
and/or a higher vapor diffusion resistance than the interlayer (22, 22')
and/or is wind-tight or air-tight
and/or is connected to the profile molding (18, 18') by adhesive bonding, welding or clamping or is produced in one piece with the profile molding (18, 18')
and/or is configured elastically pliant
and/or extends over a distance along the wall (13) bordering the structural member (10)
and/or that the flat strip (34) of the first profile molding unit (16) differs from the flat strip (34) of the second profile molding unit (16') particularly as regards its shape, material or vapor diffusion resistance.

8. A single or multiple part profile molding configured to seal a joint (23, 23') between a structural member (10), particularly between a door or window frame part, and a finish layer (17) of a wall (13) bordering the structural member (10) and an interlayer (22, 22') applied to a backing assigned to the structural member (10),
**characterized in that**
the interlayer (22, 22')
- is a foam plastic adhesive tape or an adhesive cement and is configured with a defined vapor diffusion resistance,
- comprises an optical identifier or color which is assigned to a vapor diffusion resistance in each case,
- in the fitted condition forms a seal between the profile molding (18, 18') and
the structural member (10) and
- is an elastic fastener for the profile molding (18, 18') on the structural member (10).

9. The profile molding as set forth in claim 8,
**characterized in that** the backing is formed by a fastening base (19) of the profile molding (18, 18') to which the interlayer (22, 22') is attached.

10. The profile molding as set forth in claim 8 or 9,
**characterized in that** said interlayer (22, 22') determines the vapor diffusion resistance of the profile molding (18, 18') and **in that** particularly the value of the vapor diffusion resistance is definable by varying the width of the interlayer (22, 22') in the diffusion direction and/or by varying the material properties of the interlayer (22, 22'),
wherein the interlayer (22, 22') particularly comprises a µ value greater than 5500 and particularly greater than 7000, and wherein the vapor diffusion resistance particularly comprises a value of at least 100 m equivalent air film thickness.

11. The profile molding as set forth in any of the claims 8 to 10,
**characterized in that** the profile molding (18, 18') comprises a flat strip (34) which covers the joint (33) between the structural member (10) and the bordering wall (13) and comprises in particular a defined vapor diffusion resistance and preferably a higher vapor diffusion resistance than the interlayer (22, 22').

12. The profile molding as set forth in any of the claims 8 to 11,
**characterized in that** said profile molding after processing is partly evident or is arranged at the evident transition between structural member (10) and finish layer (17).

## Revendications

1. Dispositif d'étanchéité pour des joints entre un élément de construction (10), en particulier une partie de cadre de porte ou de fenêtre, et une couche de recouvrement respective (17, 17') d'un mur (13) attenant à l'élément de construction (10),
avec un premier ensemble (16) de baguette profilée d'étanchéité pour un joint (23) extérieur par rapport à l'élément de construction (10) et un deuxième ensemble (16') de baguette profilée d'étanchéité pour un joint (23') intérieur par rapport à l'élément de construction (10),
**caractérisé en ce que** le premier ensemble (16) de baguette profilée présente une résistance à la diffusion de vapeur qui est différente de la résistance à la diffusion de vapeur du deuxième ensemble (16') de baguette profilée et
**en ce que** la résistance à la diffusion de vapeur du premier ensemble (16) de baguette profilée pour le joint extérieur (23) est inférieure à la résistance à la diffusion de vapeur du deuxième ensemble (16') de baguette profilée pour le joint intérieur (23'),
**en ce qu'**au moins un des ensembles (16 ou 16') de baguette profilée présente une baguette profilée (18 ou 18') en une ou plusieurs parties et une couche intermédiaire d'étanchéité (22, 22'),
**en ce que** la couche de recouvrement (17, 17') pour cet ensemble au moins unique (16 ou 16') de baguette profilée est une couche d'enduit (17, 17') et cet ensemble au moins unique (16 ou 16') de baguette profilée présente un moyen de raccordement pour la couche d'enduit (17, 17'),
**en ce que** la couche intermédiaire (22, 22') est un ruban adhésif en matière plastique alvéolaire ou une masse adhésive et constitue un moyen de fixation élastique pour installer la baguette profilée (18, 18') sur l'élément de construction (10),
**en ce que** l'ensemble au moins unique (16, 16') de baguette profilée est, dans l'état d'installation, installé dans le joint (23, 23') entre la couche de recouvrement (17) et l'élément de construction (10) et est assemblé en étanchéité à la couche de recouvrement (17) et à l'élément de construction (10)
et la couche intermédiaire (22, 22') forme, dans l'état d'installation de l'ensemble (16, 16') de baguette profilée, un étanchement entre la baguette profilée (18, 18') et l'élément de construction (10),
**en ce que** la couche intermédiaire (22, 22') détermine la résistance à la diffusion de vapeur de l'ensemble (16, 16') de baguette profilée et
**en ce que** les couches intermédiaires (22, 22') des ensembles (16, 16') de baguette profilée présentent des identifications ou des couleurs optiquement différentes, qui sont associées à une résistance respective à la diffusion de vapeur.

2. Dispositif d'étanchéité selon la revendication 1, **caractérisé en ce que** la baguette profilée (18 ou 18') présente une base de fixation (19) sur laquelle est fixée la couche intermédiaire (22, 22').

3. Dispositif d'étanchéité selon la revendication 1 ou 2, **caractérisé en ce que** la résistance à la diffusion de vapeur plus grande de l'ensemble intérieur (16') de baguette profilée est formée par une plus grande largeur de la couche intermédiaire (22') dans la direction de diffusion et la résistance à la diffusion de vapeur plus petite de l'ensemble extérieur (16) de baguette profilée par une plus petite largeur de la couche intermédiaire (22) dans la direction de diffusion.

4. Dispositif d'étanchéité selon l'une des revendications 1 à 3, **caractérisé en ce que** les résistances différentes à la diffusion de vapeur des deux ensembles (16, 16') de baguette profilée sont formées par des propriétés de matériau différentes des couches intermédiaires (22, 22').

5. Dispositif d'étanchéité selon l'une des revendications 1 à 4, **caractérisé en ce que** la couche intermédiaire (22, 22') de l'un (16 ou 16') des ensembles de baguette profilée présente une valeur µ supérieure à 5500 et en particulier supérieure à 7000, et/ou
**en ce que** la résistance à la diffusion de vapeur de l'un (16 ou 16') des ensembles de baguette profilée présente une valeur d'au moins 100 m d'épaisseur de couche d'air équivalente.

6. Dispositif d'étanchéité selon l'une des revendications 1 à 5, **caractérisé en ce que** la résistance à la diffusion de vapeur plus grande est égale au moins au double de la résistance à la diffusion de vapeur plus petite, de préférence à 10 fois ou 100 fois cette dernière.

7. Dispositif d'étanchéité selon l'une des revendications 1 à 6, **caractérisé en ce qu'**au moins un des ensembles (16, 16') de baguette profilée présente une bande plate (34), qui recouvre le joint central (33) entre l'élément de construction (10) et le mur attenant (13) et présente notamment une résistance déterminée à la diffusion de vapeur
et/ou une plus grande résistance à la diffusion de vapeur que la couche intermédiaire (22, 22')
et/ou est étanche au vent ou étanche à l'air
et/ou est assemblée par collage, soudage ou serrage à la baguette profilée (18, 18') ou est fabriquée d'un seul tenant avec la baguette profilée (18, 18')
et/ou est conçue élastiquement déformable
et/ou s'étend sur une certaine distance le long du mur (13) attenant à l'élément de construction (10)
et/ou **en ce que** la bande plate (34) du premier ensemble (16) de baguette profilée se différencie de la bande plate (34) du deuxième ensemble (16') de baguette profilée, en particulier en ce qui concerne la forme, le matériau ou la résistance à la diffusion de vapeur.

8. Baguette profilée en une ou plusieurs parties, qui est prévue pour étancher un joint (23, 23') entre un élément de construction (10), en particulier une partie de cadre de porte ou de fenêtre, et une couche de recouvrement (17) d'un mur (13) attenant à l'élément de construction (10) et présente une couche intermédiaire (22, 22'), qui est installée sur une surface porteuse associée à l'élément de construction (10), **caractérisée en ce que** la couche intermédiaire (22, 22')
- est un ruban adhésif en matière plastique alvéolaire ou une masse adhésive et est réalisée avec une résistance déterminée à la diffusion de vapeur,
- présente une identification optique ou une couleur, qui est associée à une résistance respective à la diffusion de vapeur,
- forme dans l'état d'installation un étanchement entre la baguette profilée (18, 18') et l'élément de construction (10) et
- est un moyen de fixation élastique pour la baguette profilée (18, 18') sur l'élément de construction (10).

9. Baguette profilée selon la revendication 8, **caractérisée en ce que** la surface porteuse est formée par une base de fixation (19) de la baguette profilée (18, 18'), sur laquelle est fixée la couche intermédiaire (22, 22').

10. Baguette profilée selon la revendication 8 ou 9, **caractérisée en ce que** la couche intermédiaire (22, 22') détermine la résistance à la diffusion de vapeur de la baguette profilée (18, 18') et **en ce que**, en particulier, la valeur de la résistance à la diffusion de vapeur peut être spécifiée en faisant varier la largeur de la couche intermédiaire (22, 22') dans la direction de diffusion et/ou en faisant varier les propriétés de matériau de la couche intermédiaire (22, 22'), sachant notamment que la couche intermédiaire (22, 22') présente une valeur µ supérieure à 5500 et en particulier supérieure à 7000, et sachant notamment que la résistance à la diffusion de vapeur présente une valeur d'au moins 100 m d'épaisseur de couche d'air équivalente.

11. Baguette profilée selon l'une des revendications 8 à 10, **caractérisée en ce que** la baguette profilée (18, 18') présente une bande plate (34), qui recouvre le joint (33) entre l'élément de construction (10) et le mur attenant (13) et qui présente notamment une résistance déterminée à la diffusion de vapeur et de préférence une plus grande résistance à la diffusion de vapeur que la couche intermédiaire (22, 22').

12. Baguette profilée selon l'une des revendications 8 à 11, **caractérisée en ce qu'**à la suite de la mise en œuvre, elle est partiellement visible ou elle est disposée à la transition visible entre l'élément de construction (10) et la couche de recouvrement (17).
